(19) **Europäisches Patentamt / European Patent Office / Office européen des brevets**

(11) **EP 4 696 720 A1**

(12) **EUROPEAN PATENT APPLICATION**
published in accordance with Art. 153(4) EPC

(43) Date of publication:
**18.02.2026 Bulletin 2026/08**

(21) Application number: **24788668.2**

(22) Date of filing: **05.04.2024**

(51) International Patent Classification (IPC):
**C08F 2/24** (2006.01)     **C08F 214/26** (2006.01)
**C08F 216/14** (2006.01)     **C08F 259/08** (2006.01)
**C08L 27/18** (2006.01)

(52) Cooperative Patent Classification (CPC):
**C08F 2/24; C08F 214/26; C08F 216/14;**
**C08F 259/08; C08L 27/18**

(86) International application number:
**PCT/JP2024/014064**

(87) International publication number:
**WO 2024/214644 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 JP 2023063511**

(71) Applicant: **AGC INC.**
**Chiyoda-ku,**
**Tokyo 1008405 (JP)**

(72) Inventors:
• **SHIBASAKI, Kosuke**
  **Tokyo 100-8405 (JP)**
• **OTSUGU, Satoshi**
  **Tokyo 100-8405 (JP)**
• **TAGUCHI, Daisuke**
  **Tokyo 100-8405 (JP)**

(74) Representative: **Müller-Boré & Partner**
**Patentanwälte PartG mbB**
**Friedenheimer Brücke 21**
**80639 München (DE)**

(54) **FLUORINE-CONTAINING POLYMER PRODUCTION METHOD, AQUEOUS DISPERSION, AND SOLID COMPOSITION**

(57)     To provide a method for producing a fluorinated polymer, by which the fluorinated polymer can be efficiently produced without using an emulsifier while using an aqueous medium with less environmental burden; an aqueous dispersion; and a solid composition. The method for producing a fluorinated polymer of the present invention is a method for producing a fluorinated polymer, which comprises polymerizing a monomer containing tetrafluoroethylene in an aqueous dispersion containing a first fluorinated polymer having a glass transition temperature of 10°C or lower and an aqueous medium, to produce a second fluorinated polymer that is different from the first fluorinated polymer; wherein before start of the polymerization of the monomer, the content of the first fluorinated polymer is 0.01 to 4.0 mass% to the total mass of the aqueous dispersion; and before start of the polymerization of the monomer, the concentration of a fluorinated emulsifier is 100 mass ppm or less to the total mass of the first fluorinated polymer of the aqueous dispersion.

EP 4 696 720 A1

# EP 4 696 720 A1

**Description**

TECHNICAL FIELD

The present invention relates to a method for producing a fluorinated polymer, an aqueous dispersion, and a solid composition.

BACKGROUND ART

Fluorinated polymers, such as tetrafluoroethylene-based copolymers, are used in various industrial fields by virtue of excellent heat resistance, chemical resistance, flame retardancy, weather resistance, etc.

As a method for producing the fluorinated polymer, a method of emulsion-polymerizing a fluorinated monomer in an aqueous medium using a fluorinated emulsifier may be mentioned (Patent Document 1).

PRIOR ART DOCUMENTS

PATENT DOCUMENTS

Patent Document 1: WO2007/046377

DISCLOSURE OF INVENTION

TECHNICAL PROBLEM

By the method for producing a fluorinated polymer in Patent Document 1, although the environmental burden is less since an aqueous medium is used, if the emulsifier as an essential component remains in a large amount in the aqueous dispersion obtained by the polymerization, it is necessary to remove the emulsifier depending upon the application.

It is an object of the present invention to provide a method for producing a fluorinated polymer, by which the fluorinated polymer can be efficiently produced without using an emulsifier while using an aqueous medium with less environmental burden.

It is another object of the present invention to provide an aqueous dispersion and a solid composition.

SOLUTION TO PROBLEM

The present inventors have conducted extensive studies and as a result found that the above objects can be achieved by the following constitutions.

[1] A method for producing a fluorinated polymer, which comprises polymerizing a monomer containing tetrafluoroethylene in an aqueous dispersion containing a first fluorinated polymer having a glass transition temperature of 10°C or lower and an aqueous medium, to produce a second fluorinated polymer that is different from the first fluorinated polymer, wherein

before start of the polymerization of the monomer, the content of the first fluorinated polymer is 0.01 to 4.0 mass% to the total mass of the aqueous dispersion, and wherein
before start of the polymerization of the monomer, the concentration of a fluorinated emulsifier is 100 mass ppm or less to the total mass of the first fluorinated polymer in the aqueous dispersion.

[2] The method for producing the fluorinated polymer according to [1], wherein the first fluorinated polymer contains units based on tetrafluoroethylene and units based on a perfluoro(alkyl vinyl ether).

[3] The method for producing the fluorinated polymer according to [2], wherein in the first fluorinated polymer, the proportion of the amount of the units based on a perfluoro(alkyl vinyl ether) is 20 to 60 mol% to the total amount of the units based on tetrafluoroethylene and the units based on a perfluoro(alkyl vinyl ether).

[4] The method for producing the fluorinated polymer according to any one of [1] to [3], wherein the amount of the monomer used is 1 to 50 parts by mass per 100 parts by mass of the amount of the aqueous medium used.

[5] The method for producing the fluorinated polymer according to any one of [1] to [4], wherein the monomer is polymerized in the presence of a polymerization initiator.

[6] An aqueous dispersion comprising an aqueous medium, a first fluorinated polymer having a glass transition temperature of 10°C or lower and a second fluorinated polymer that contains units based on tetrafluoroethylene and is different from the first fluorinated polymer, wherein a temperature T at which the maximum heat absorption amount is observed within a range of 10 to 35°C with respect to a solid composition obtained by coagulating the aqueous dispersion, measured by the following method, is 19°C or lower:

temperature T measurement method:

measured with respect to a solid composition having no heat history to 300°C or higher, at a heating rate of 10°C/min by a differential scanning calorimeter.

[7] A solid composition comprising a first fluorinated polymer having a glass transition temperature of 10°C or lower, and a second fluorinated polymer that contains units based on tetrafluoroethylene and is different from the first fluorinated polymer, wherein a temperature T at which the maximum heat absorption amount is observed within a range of 10 to 35°C, measured by the following method, is 19°C or lower:

temperature T measurement method:

measured with respect to a solid composition having no heat history to 300°C or higher, at a heating rate of 10°C/min by a differential scanning calorimeter.

[8] A solid composition obtained by coagulating the aqueous dispersion as defined in [6], wherein a temperature T at which the maximum heat absorption amount is observed within a range of 10 to 35°C, is 19°C or lower:

temperature T measurement method:

measured with respect to a solid composition having no heat history to 300°C or higher, at a heating rate of 10°C/min by a differential scanning calorimeter.

[9] The aqueous dispersion according to [6], wherein the content of units based on a perfluoro(alkyl vinyl ether) is 0.1 to 5.0 mol% to the total amount of all units of the first fluorinated polymer and the second fluorinated polymer, and the content of a compound represented by the formula (S1) and the content of a compound represented by the formula (S2) are respectively 100 mass ppb or less to the total mass of the first fluorinated polymer and the second fluorinated polymer:

$$\text{formula (S1):} \qquad H\text{-}(CF_2)_{n-1}\text{-}COOM$$

$$\text{formula (S2):} \qquad H\text{-}(CF_2)_n\text{-}SO_3M$$

in the formula (S1) and the formula (S2), M is each independently a hydrogen atom, Na, K or $NH_4$, and n is each independently 8 or 10.

[10] The solid composition according to [7], wherein the content of units based on a perfluoro(alkyl vinyl ether) is 0.1 to 5.0 mol% to the total amount of all units of the first fluorinated polymer and the second fluorinated polymer, and the content of a compound represented by the formula (S1) and the content of a compound represented by the formula (S2) are respectively 100 mass ppb or less to the total mass of the first fluorinated polymer and the second fluorinated polymer:

$$\text{formula (S1):} \qquad H\text{-}(CF_2)_{n-1}\text{-}COOM$$

$$\text{formula (S2):} \qquad H\text{-}(CF_2)_n\text{-}SO_3M$$

in the formula (S1) and the formula (S2), M is each independently a hydrogen atom, Na, K or $NH_4$, and n is each independently 8 or 10.

ADVANTAGEOUS EFFECTS OF INVENTION

According to the present invention, it is possible to provide a method for producing a fluorinated polymer, by which the fluorinated polymer can be efficiently produced without using an emulsifier while using an aqueous medium with less environmental burden.

According to the present invention, it is also possible to provide an aqueous dispersion and a solid composition.

DESCRIPTION OF EMBODIMENTS

Meanings of terms used in the present specification are as follows.

" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by nuclear magnetic resonance spectroscopy (NMR). Usually, the content of each units calculated from the amount of charge of each monomer substantially agrees with the actual content of each units.

[Method for producing fluorinated polymer]

The method for producing a fluorinated polymer of the present invention (hereinafter sometimes referred to as "the present production method") is a method in which a monomer containing tetrafluoroethylene (hereinafter sometimes referred to as "the specific monomer") is polymerized in an aqueous dispersion containing a first fluorinated polymer having a glass transition temperature of 10°C or lower and an aqueous medium, to produce a second fluorinated polymer that is different from the first fluorinated polymer.

In the present production method, before start of the polymerization of the monomer, the content of the first fluorinated polymer is 0.01 to 4.0 mass% to the total mass of the aqueous dispersion.

Further, in the present production method, before start of the polymerization of the monomer, the concentration of a fluorinated emulsifier is 100 mass ppm or less to the total mass of the first fluorinated polymer in the aqueous dispersion.

The reason as to why the second fluorinated polymer can be efficiently produced without using an emulsifier by the present production method is estimated to be because by use of the aqueous dispersion containing the first fluorinated polymer having a glass transition temperature of 10°C or lower in a predetermined amount, the first fluorinated polymer functions as a favorable polymerization site for the second fluorinated polymer.

<Aqueous dispersion>

In the present production method, the aqueous dispersion containing the first fluorinated polymer and the aqueous medium is used.

(First fluorinated polymer)

It is estimated as follows. That is, the first fluorinated polymer adsorbs and includes the specific monomer at its hydrophobic moiety at the time of polymerization of the specific monomer to solubilize the specific monomer, and by adding a polymerization initiator thereto, the specific monomer is polymerized in particles of the first fluorinated polymer. Further, the first fluorinated polymer contributes to dispersion stabilization in the aqueous medium.

The glass transition temperature (hereinafter sometimes referred to as "Tg") of the first fluorinated polymer is 10°C or lower.

Tg of the first fluorinated polymer is preferably 5°C or lower, more preferably 3°C or lower, further preferably 0°C or lower, whereby the first fluorinated polymer can efficiently adsorb the specific monomer.

Tg of the first fluorinated polymer is, in view of thermal stability after forming, preferably -50°C or higher, more preferably -45°C or higher, further preferably -40°C or higher.

Tg of the first fluorinated polymer is measured by differential scanning calorimetry (DSC), and detailed measurement conditions are as shown in the after-described Examples.

To adjust Tg of the first fluorinated polymer to be within the above range, for example, the type or the amount of the monomer to be used for production of the first fluorinated polymer is adjusted.

The first fluorinated polymer preferably contains units based on tetrafluoroethylene (hereinafter sometimes referred to as "TFE") (hereinafter sometimes referred to as "TFE units") and units bases on a perfluoro(alkyl vinyl ether) (hereinafter sometimes referred to as "PAVE") (hereinafter sometimes referred to as "PAVE units"), whereby Tg can readily be adjusted to be within the above range and more excellent effects of the present invention will be achieved,

PAVE is preferably a monomer represented by the formula (1), whereby excellent polymerizability at the time of production of the first fluorinated polymer is achieved and the second fluorinated polymer can be produced more efficiently.

$$CF_2=CF-O-R^{f1} \qquad (1)$$

In the formula (1), $R^{f1}$ is a $C_{1-10}$ perfluoroalkyl group. The number of carbon atoms in $R^{f1}$ is, in view of more excellent polymerizability, preferably 1 to 8, more preferably 1 to 6, further preferably 1 to 5, particularly preferably 1 to 3.

The perfluoroalkyl group may be linear or branched.

Specific examples of PAVE include perfluoro(methyl vinyl ether) (hereinafter sometimes referred to as "PMVE"), perfluoro(ethyl vinyl ether) (hereinafter sometimes referred to as "PEVE") and perfluoro(propyl vinyl ether) (hereinafter sometimes referred to as "PPVE"), and among them, preferred are PMVE and PPVE, more preferred is PMVE, whereby the second fluorinated polymer can be produced more efficiently.

When the first fluorinated polymer contains the TFE units and the PAVE units, in the first fluorinated polymer, the proportion of the amount of the PAVE units to the total amount of the TFE units and the PAVE units is preferably 20 to 60 mol%, more preferably 25 to 60 mol%, further preferably 30 to 55 mol%, whereby Tg can readily be adjusted to be within the above range and the second fluorinated polymer can be produced more efficiently.

The first fluorinated polymer may contain units based on a monomer other than TFE and PAVE, however, it preferably contains substantially no units based on other monomer, whereby the second fluorinated polymer can be produced more efficiently.

The wording "contains substantially no units based on other monomer" means that the content of units based on other monomer is 0.01 mol% or less to all units in the first fluorinated polymer, and the content is more preferably 0 mol%.

In a case where the first fluorinated polymer contains units based on other monomer, such other monomer is preferably hexafluoropropylene.

Before start of the polymerization of the monomer to be used for production of the second fluorinated polymer, the content of the first fluorinated polymer is, to the total mass of the aqueous medium in the aqueous dispersion, 0.01 to 4.0 mass%, and preferably 0.01 to 0.6 mass%, more preferably 0.01 to 0.5 mass%, whereby the second fluorinated polymer can be produced more efficiently.

In this specification, "before start of the polymerization of the monomer to be used for production of the second fluorinated polymer" means immediately before the polymerization start point. The "polymerization start point" means a point when the monomer and the polymerization initiator are allowed to coexist in a reactor after the interior of the reactor is heated to the polymerization temperature or higher, a point when the interior of the reactor is heated to the polymerization temperature or higher after the monomer and the polymerization initiator are allowed to coexist in the reactor, or the like.

Before the start of the polymerization of the monomer to be used for production of the second fluorinated polymer, the concentration of sulfate ions is preferably 10 mass ppm or less, more preferably 5 mass ppm or less to the total mass of the aqueous medium in the aqueous dispersion, whereby coloring of the second fluorinated polymer will be suppressed. The lower limit may be 0 mass ppm.

As an example of a method to adjust the concentration of sulfate ions to the above range, a method of removing the sulfate ions using an anion exchange resin at the time of production of the first fluorinated polymer may be mentioned.

The sulfate ions may be derived, for example, from the polymerization initiator (particularly ammonium persulfate) used at the time of production of the first fluorinated polymer, and may sometimes be contained in the aqueous dispersion containing the first fluorinated polymer. It is estimated that by the sulfate ion content being 10 mass ppm or less (particularly 5 mass ppm or less), formation of a low heat resistant terminal end group in the second fluorinated polymer is suppressed and as a result, coloring of the second fluorinated polymer is suppressed.

Before the start of the polymerization of the monomer to be used for production of the second fluorinated polymer, the concentration of ammonium ions is preferably 20 mass ppm or less, more preferably 10 mass ppm or less to the total mass of the aqueous medium in the aqueous dispersion, whereby coagulation of the second fluorinated polymer is suppressed. The lower limit may be 0 mass ppm.

As an example of a method to adjust the concentration of ammonium ions to the above value, a method or removing the ammonium ions using a cation exchange resin at the time of production of the first fluorinated polymer may be mentioned.

The ammonium ions may be derived, for example, from the initiator (particularly ammonium persulfate) used at the time of production of the first fluorinated polymer, and may sometimes be contained in the aqueous dispersion containing the first fluorinated polymer. It is estimated that by the ammonium ion content being 20 mass ppm or less, the ion intensity of the aqueous medium is reduced and as a result, the production efficiency for the second fluorinated polymer improves.

The first fluorinated polymer is dispersed in the aqueous medium preferably in the form of particles.

In such a case, the average particle size of the first fluorinated polymer is preferably 1 to 150 nm, more preferably 10 to 120 nm, further preferably 50 to 120 nm, whereby the second fluorinated polymer can be produced more efficiently.

The average particle size of the first fluorinated polymer is a particle size (D50) at a point where the cumulative volume is 50% on a cumulative curve obtained by measuring the particle size distribution by laser diffraction/scattering method and taking the whole volume of the group of particles to be 100%, and detailed measurement conditions are as shown in the after-described Examples.

The method for producing the first fluorinated polymer is preferably a method of polymerizing the monomer (preferably a monomer mixture containing TFE and PAVE) in the aqueous medium in the presence of a polymerization initiator, whereby the first fluorinated dispersed in the form of particles in the aqueous medium can be obtained.

The aqueous medium thus obtained, having particles of the first fluorinated polymer dispersed therein, may be used as it is as the aqueous dispersion, or may be mixed with another aqueous medium and used as the aqueous dispersion. Otherwise, solvent replacement may be conducted to disperse the first fluorinated polymer in another aqueous medium, and the resulting dispersion may be used as the aqueous dispersion.

The polymerization initiator to be used of production of the first fluorinated polymer is preferably a water-soluble polymerization initiator, more preferably a persulfate such as ammonium persulfate, sodium persulfate or potassium persulfate, an organic polymerization initiator such as disuccinic persulfate or azobisisobutylamidine dihydrochloride, further preferably a persulfate, particularly preferably ammonium persulfate.

The aqueous medium to be used for production of the first fluorinated polymer may be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

The method for producing the first fluorinated polymer preferably has a heating step of heating the aqueous medium having the first fluorinated polymer dispersed. By the heating step, the polymerization initiator present in the system is deactivated, and thus polymerization for the second fluorinated polymer is less likely to be influenced by the polymerization initiator used for production of the first fluorinated polymer. As a result, a high molecular weight second fluorinated polymer is likely to be obtained.

The heating temperature in the heating step is preferably 70 to 100°C, more preferably 80 to 98°C, further preferably 85 to 95°C, whereby deactivation of the polymerization initiator in the aqueous medium can be more promoted.

(Aqueous medium)

The aqueous dispersion to be used for the present production method contains an aqueous medium. The aqueous medium contained in the aqueous dispersion may be the polymerization solvent used for production of the first fluorinated polymer, as described above.

Specific examples of the aqueous medium contained in the aqueous dispersion are the same as the specific examples of the aqueous medium used for the production of the first fluorinated polymer described above.

Before the start of the polymerization of the monomer to be used for production of the second fluorinated polymer, the content of the aqueous medium is preferably 60 to 99.9 mass%, more preferably 96 to 99.9 mass%, further preferably 98 to 99.9 mass%, to the total mass of the aqueous dispersion.

(Other component)

The aqueous dispersion used for the present production method may contain a component other than the first fluorinated polymer and the aqueous medium.

Specific examples of other component which the aqueous dispersion may contain include a chain transfer agent, an emulsifier other than the fluorinated emulsifier, a pH adjusting agent and a wax.

Specific examples of the chain transfer agent include ethyl acetate, methanol, ethanol, t-butyl methyl ether, diethyl ether, n-pentane, cyclohexane, methane and propane.

Specific examples of the emulsifier other than the fluorinated emulsifier include sodium lauryl sulfate, PELEX SS-H manufactured by Kao Corporation, and Newcol 1305-SN manufactured by NIPPON NYUKAZAI CO., LTD.

Specific examples of the pH adjusting agent include inorganic salts. Specific examples of the inorganic salts include phosphates such as disodium hydrogen phosphate and sodium dihydrogen phosphate, and carbonates such as sodium hydrogen carbonate and sodium carbonate. More preferred specific examples of phosphates include disodium hydrogen phosphate dihydrate and disodium hydrogen phosphate dodecahydrate.

Specific examples of the wax include Paraffin Wax-155 and Paraffin Wax-150 (each manufactured by NIPPON SEIRO CO., LTD.).

In a case where the aqueous dispersion contains the chain transfer agent, the content of the chain transfer agent is preferably 0.1 to 5 parts by mass per 100 parts by mass of the aqueous medium. The amount of the chain transfer agent used is preferably 0.1 to 20 parts by mass, more preferably 0.1 to 15 parts by mass, further preferably 0.1 to 10 parts by mass, per 100 parts by mass of the specific monomer used.

In a case where the aqueous dispersion contains the emulsifier other than the fluorinated emulsifier, the content of the emulsifier other than the fluorinated emulsifier is preferably 0.01 to 5 parts by mass per 100 parts by mass of the aqueous medium.

In a case where the aqueous dispersion contains the pH adjusting agent, the content of the pH adjusting agent is preferably 0.01 to 3.0 parts by mass per 100 parts by mass of the aqueous medium.

In a case where the aqueous dispersion contains the wax, the content of the wax is preferably 1 to 10 parts by mass per 100 parts by mass of the aqueous medium.

Before the start of the polymerization of the monomer to be used for production of the second fluorinated polymer, the concentration of the fluorinated emulsifier is 100 mass ppm or less to the total mass of the first fluorinated polymer in the aqueous dispersion, and preferably 50 mass ppm or less, more preferably 25 mass ppm, further preferably 5 mass ppm or less, whereby more excellent effects of the present invention will be achieved. The lower limit may be 0 mass ppm.

The fluorinated emulsifier means an emulsifier having a hydrophilic moiety and a hydrophobic moiety, the hydrophobic moiety containing a fluorine atom. Specific examples of the fluorinated emulsifier include fluorinated alkanoates and fluorinated ether carboxylic acid compounds.

To adjust the concentration of the fluorinated emulsifier to be within the above range, a method of producing the aqueous dispersion without using the fluorinated emulsifier may be mentioned.

Before the start of the polymerization of the monomer to be used for production of the second fluorinated polymer, the concentration of fluoride ions is preferably 100 mass ppm or less, more preferably 50 mass ppm or less to the total mass of the aqueous dispersion, in view of polymerization stability. The lower limit may be 0 mass ppm.

To adjust the concentration of the fluoride ions to be within the above range, a method of removing the sulfate ions by using an anion exchange resin at the time of production of the first fluorinated polymer may be mentioned.

The fluoride ions may sometimes be formed by a reaction of the polymerization initiator (such as ammonium persulfate) and the monomer used for production of the first fluorinated polymer and contained in the aqueous dispersion.

<Specific monomer>

The specific monomer contains TFE.

The amount of TFE used is preferably 97 to 100 mass%, more preferably 98 to 100 mass%, further preferably 99 to 100 mass%, to the total amount of the specific monomer.

The specific monomer may contain a fluorinated monomer other than TFE, or may contain substantially no fluorinated monomer other than TFE.

The wording "contains substantially no fluorinated monomer other than TFE" means that the amount of the fluorinated monomer other than TFE used is 0.0001 mass% or less to the amount of the specific monomer used, and the amount may be 0 mass%.

The fluorinated monomer other than TFE may be chlorotrifluoroethylene (hereinafter sometimes referred to as "CTFE"), vinylidene fluoride (hereinafter sometimes referred to as "VdF"), a fluoroalkylethylene, PAVE or hexafluoropropylene. The fluorinated monomer other than TFE may be used in combination of two or more types.

The specific monomer may contain a monomer other than the fluorinated monomer (hereinafter sometimes referred to as "other monomer"), but preferably contains no other monomer.

The wording "contains substantially no other monomer" means that the amount of the other monomer used is 0.0001 mass% or less to the amount of the specific monomer used, and the amount is preferably 0 mass%.

Specific examples of the other monomer include ethylene, propylene, vinyl chloride and vinylidene chloride. The other monomer may be used in combination of two or more types.

The amount of the specific monomer used is preferably 1 to 50 parts by mass, more preferably 1 to 40 parts by mass, further preferably 1 to 30 parts by mass, per 100 parts by mass of the amount of use of the aqueous medium contained in the aqueous dispersion.

<Polymerization initiator>

In the present production method, the specific monomer is polymerized preferably in the presence of the polymerization initiator.

The polymerization initiator is preferably an oil-soluble radical initiator, a water-soluble radical initiator or a water-soluble redox catalyst.

Specific examples of the oil-soluble radical initiator include oil-soluble organic peroxides such as tert-butyl peroxypivalate (hereinafter sometimes referred to as "PBPV") and diisopropyl peroxydicarbonate (hereinafter sometimes referred to as "IPP").

Specific examples of the water-soluble radical initiator include water-soluble organic peroxides such as persulfates including ammonium persulfate, potassium persulfate, etc., disuccinic peroxide, bisglutaric peroxide and tert-butyl hydroperoxide (hereinafter sometimes referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogensulfite or its salt, thiosulfuric acid or its salt, an organic salt or an inorganic salt.

The persulfate is preferably potassium persulfate of ammonium persulfate. The sulfite is preferably sodium sulfite. The inorganic salt is preferably a combination of sulfate anion, sulfite anion or chloride anion and metal ion. The metal ion is preferably a transition metal ion, such as a manganese, iron, cobalt, nickel, copper, zinc, cerium or silver ion, and is particularly preferably an iron ion. The inorganic salt is preferably iron(II) sulfate. The polymerization initiator is preferably the oil-soluble radical initiator or the water-soluble radical initiator, more preferably the water-soluble radical initiator, further preferably the oil-soluble organic peroxide, whereby the fluorinated polymer can be produced more efficiently.

The polymerization initiator may be used in combination of two or more types.

The amount of the polymerization initiator used is preferably 1 to 1000 ppm, more preferably 5 to 750 ppm, further preferably 10 to 500 ppm per 100 parts by mass of the specific monomer used.

<Other component>

At the time of polymerization of the specific monomer, a component other than the above components (hereinafter sometimes referred to as "other component") may further be used. Specific examples of the other component include reducing agents.

The amount of the other component used is preferably 1 to 2000 ppm per 100 parts by mass of the specific monomer used.

<Process>

In the present production method, the specific monomer is polymerized in the aqueous dispersion to produce the second fluorinated polymer.

The second fluorinated polymer obtained by the present production method contains unis based on TFE (hereinafter sometimes referred to as "TFE units"), and is preferably a TFE homopolymer (hereinafter sometimes referred to as "PTFE").

The first fluorinated polymer and the second fluorinated polymer may be copolymerized.

The content of the TFE units contained in the second fluorinated polymer is preferably 99.0 to 100.0 mol%, more preferably 99.5 to 100.0 mol%, further preferably 99.9 to 100.0 mol%, to all units constituting the second fluorinated polymer.

The specific monomer is charged to a reaction system (that is a polymerization reactor) by a conventional method. For example, the specific monomer may be charged to the reaction system continuously or intermittently so as to keep a predetermined polymerization pressure. Otherwise, the specific monomer may be dissolved in an aqueous medium, and the resulting solution is charged to the reaction system continuously or intermittently.

In a case where the polymerization initiator is used, it may be added to the reaction system all at once, or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch process.

The polymerization of the specific monomer is conducted preferably substantially in the absence of an emulsifier.

The emulsifier may be a known emulsifier, such as a conventional surfactant.

The wording "substantially in the absence of an emulsifier" means an environment in which the content of the emulsifier is 0.03 mass ppm or less to the total mass of the aqueous medium contained in the aqueous dispersion, and the content is preferably 0.02 mass ppm or less, more preferably 0 mass ppm.

As described above, it is estimated that the specific monomer is polymerized in the particles of the first fluorinated polymer at the time of polymerization of the specific monomer, and thus it is considered that particles containing the first fluorinated polymer and the second fluorinated polymer are formed by the present production method. That is, it is estimated that according to the present production method, the second fluorinated polymer is obtained in the form of particles containing the first fluorinated polymer and the second fluorinated polymer. In this case, by the present production method, an aqueous dispersion having the particles containing the first fluorinated polymer and the second fluorinated polymer dispersed in the aqueous medium is obtained.

[Aqueous dispersion]

The aqueous dispersion of the present invention (hereinafter sometimes referred to as "the present aqueous dispersion") is an aqueous dispersion containing an aqueous medium, a first fluorinated polymer having Tg of 10°C or lower, and a second fluorinated polymer that contains TFE units and is different from the first fluorinated polymer.

In the present aqueous dispersion, the content of the PAVE units is 0.1 to 5.0 mol% to the total amount of all units in the first fluorinated polymer and the second fluorinated polymer.

In the present aqueous dispersion, each of the content of a compound represented by the after-described formula (S1) and the content of a compound represented by the after-described formula (S2) is 100 mass ppb or less to the total mass of the first fluorinated polymer and the second fluorinated polymer.

The present aqueous dispersion may be obtained, for example, by the present production method described above.

<First fluorinated polymer and second fluorinated polymer>

The first fluorinated polymer is the same as the first fluorinated polymer in the present production method described above, and the preferred embodiment is also the same.

The preferred embodiment of the first fluorinated polymer contained in the present aqueous dispersion is an embodiment containing TFE units and PAVE units.

In a case where the first fluorinated polymer contains TFE units and PAVE units, the proportion of the amount of the PAVE units in the first fluorinated polymer is preferably 20 to 60 mol%, more preferably 25 to 60 mol%, further preferably 30 to 55 mol% to the total amount of the TFE units and the PAVE units.

The content of the first fluorinated polymer is preferably 0.10 to 1.0 mass%, more preferably 0.15 to 0.80 mass%, further preferably 0.20 to 0.60 mass%, to the total mass of the present aqueous dispersion.

The second fluorinated polymer is the same as the second fluorinated polymer in the present production method described above, and the preferred embodiment is also the same.

The second fluorinated polymer contained in the present aqueous dispersion contains TFE units.

The content of the TFE units contained in the second fluorinated polymer is preferably 99.0 to 100.0 mol%, more preferably 99.5 to 100.0 mol%, further preferably 99.9 to 100.0 mol% to all units constituting the second fluorinated polymer.

The content of the second fluorinated polymer is preferably 10 to 40 mass%, more preferably 12 to 35 mass%, further preferably 15 to 30 mass% to the total mass of the present aqueous dispersion.

In the present aqueous dispersion, the content of the PAVE units is 0.1 to 5.0 mol%, preferably 0.2 to 3.0 mol%, more preferably 0.3 to 2.0 mol% to the total amount of all units in the first fluorinated polymer and the second fluorinated polymer.

The PAVE units are contained in at least one of the first fluorinated polymer and the second fluorinated polymer, and are contained preferably in the first fluorinated polymer.

In the present aqueous dispersion, the content of the TFE units is preferably 90 to 99.8 mol%, more preferably 93 to 99.5 mol%, further preferably 95 to 99.0 mol%, to the total amount of all units in the first fluorinated polymer and the second fluorinated polymer.

The TFE units should be contained in at least the second fluorinated polymer, and are contained preferably in both the first fluorinated polymer and the second fluorinated polymer.

In the present aqueous dispersion, the total content of the first fluorinated polymer and the second fluorinated polymer is preferably 10 to 40 mass%, more preferably 12 to 35 mass%, further preferably 15 to 35 mass% to the total mass of the present aqueous dispersion.

The first fluorinated polymer and the second fluorinated polymer may be present in the present aqueous dispersion separately, however, they are present preferably in the form of particles containing the first fluorinated polymer and the second fluorinated polymer.

In such a case, the average particle size of the particles is preferably 500 μm or less, more preferably 450 μm or less, further preferably 400 μm or less, in view of dispersion stability.

Further, the average particle size of the particles is preferably 50 nm or more, more preferably 80 nm or more, further preferably 100 nm or more, in view of coagulation property.

The average particle size of the particles is a particle size at which the cumulative volume is 50% on a cumulative curve obtained by measuring the particle size distribution by laser diffraction/scattering method and taking the whole volume of the group of particles to be 100%.

<Aqueous medium>

Specific examples of the aqueous medium contained in the present aqueous dispersion are the same as the specific examples of the aqueous medium used for production of the first fluorinated polymer described above.

The content of the aqueous medium is preferably 50 to 99 mass%, more preferably 60 to 99 mass%, further preferably 70 to 99 mass% to the total mass of the present aqueous dispersion, in view of dispersion stability of the first fluorinated polymer and the second fluorinated polymer.

<Compound represented by the formula (S1) and compound represented by the formula (S2)>

The compound represented by the formula (S1) and the compound represented by the formula (S2) are components which may be generated when TFE is polymerized in the presence of a polymerization initiator, a chain transfer agent and an emulsifier (particularly a hydrocarbon-based emulsifier). Thus, in a case where no emulsifier is used in production of the second fluorinated polymer contained in the present aqueous dispersion, generation of the compound represented by the formula (S1) and the compound represented by the formula (S2) can be suppressed, and thus it is easy to adjust the contents of these compounds to be within the above-described range.

$$\text{Formula (S1):} \qquad H\text{-}(CF_2)_{n\text{-}1}\text{-}COOM$$

$$\text{Formula (S2):} \qquad H\text{-}(CF_2)_n\text{-}SO_3M$$

In the formula (S1) and the formula (S2), M is each independently a hydrogen atom, Na, K or $NH_4$, and n is each independently 8 or 10.

In the present aqueous dispersion, each of the content of the compound represented by the formula (S1) and the content of the compound represented by the formula (S2) is 100 mass ppb or less, preferably 50 mass ppb or less, more preferably 25 mass ppb or less, further preferably 0 mass ppb (that is no compound represented by the formula (S1) nor compound represented by the formula (S2) is contained) to the total mass of the first fluorinated polymer and the second fluorinated polymer.

<Others>

The present aqueous dispersion preferably contains substantially no emulsifier. The emulsifier may be the above fluorinated emulsifier or an emulsifier other than the fluorinated emulsifier.

The wording "the present aqueous dispersion contains substantially no emulsifier" means that the content of the emulsifier is 0.03 mass ppm or less to the total mass of the present aqueous dispersion, and the content is preferably 0.02 mass ppm or less, more preferably 0 mass ppm.

<Application>

The present aqueous dispersion, which does not requires the emulsifier as described above, can easily be formed into a dispersion the medium of which is an organic solvent such as N-methyl pyrrolidone or acetone by solvent replacement.

For example, the present aqueous dispersion may be mixed with an organic solvent and dehydrated by evaporation or over anhydrous sodium sulfate, to be formed into a dispersion the medium of which is the organic solvent.

The present aqueous dispersion is capable of stably dispersing the fluorinated polymer even without containing the emulsifier. Thus, the present aqueous dispersion is suitably used for e.g. coting application, binder application.

A powder of the first fluorinated polymer and the second fluorinated polymer can be obtained by coagulating the first fluorinated polymer and the second fluorinated polymer (preferably particles containing the first fluorinated polymer and the second fluorinated polymer) from the present aqueous dispersion.

The coagulation method may be freeze coagulation, acid coagulation, base coagulation or coagulation using a coagulant, but is not limited thereto.

In the case of freeze coagulation, the coagulation temperature is preferably -20 to 0°C. The coagulation time is preferably 1 hour or more, more preferably 2 hours or more.

In the case of acid coagulation, preferred is a method of adding a solution containing an acid to the present aqueous dispersion. The acid to be added may, for example, be hydrochloric acid, nitric acid, sulfuric acid, oxalic acid or hydrofluoric acid, and is preferably hydrochloric acid. The concentration of the acid in the solution containing the acid is preferably 0.1 to 50 mass%, more preferably 1 to 30 mass%, further preferably 1 to 10 mass%.

Base coagulation is preferably a method of adding a solution containing a base to the present aqueous dispersion. The base to be added may, for example, be sodium hydroxide, potassium hydroxide or ammonium carbonate, and is preferably sodium hydroxide. The concentration of the base in the solution containing the base is preferably 0.1 to 50 mass%, more preferably 1 to 30 mass%, further preferably 1 to 10 mass%.

For coagulation by a coagulant, a conventional coagulant may be used. The conventional coagulant may, for example, be an aluminum salt, a calcium salt or a magnesium salt. Specifically, it may, for example, be aluminum sulfate, alum represented by the formula $M'Al(SO_4)_2 \cdot 12H_2O$ (wherein M' is a monovalent cation other than lithium), calcium nitrate or magnesium sulfate, preferably alum, more preferably potassium alum wherein M is potassium.

The coagulation method is preferably the base coagulation, whereby the coagulation is particularly likely to proceed.

[Solid composition]

The solid composition of the present invention (hereinafter sometimes referred to as "the present solid composition") is a solid composition comprising a first fluorinated polymer having a glass transition temperature of 10°C or lower and a second fluorinated polymer that contains TFE units and is different from the first fluorinated polymer.
In the present solid composition, the content of the PAVE units is 0.1 to 5.0 mol% to the total amount of all units in the first fluorinated polymer and the second fluorinated polymer.
Further, in the present solid composition, each of the content of the compound represented by the above formula (S1) and the content of the compound represented by the above formula (S2) is 100 mass ppb or less to the total mass of the first fluorinated polymer and the second fluorinated polymer.
In this specification, the solid composition means a composition having a solid content mass of 99 mass% or more.
The solid content mass is calculated by the following method based on the mass before and after heating.
2.0 g of the solid composition is heated at 170°C for 20 minutes, the mass of the residue is weighed, and the solid content mass is calculated in accordance with the following formula.

$$\text{Solid content mass (mass\%)} = 100 \times (\text{mass of residue})/(\text{mass of solid composition})$$

The present solid composition is obtained preferably by coagulation using the above present aqueous dispersion. The preferred embodiment of the present solid composition is the same as the preferred embodiment of the first fluorinated polymer and the second fluorinated polymer contained in the present aqueous dispersion, and its description is omitted.
The first fluorinated polymer and the second fluorinated polymer may be present in the present solid composition separately but are present preferably in the form of particles containing the first fluorinated polymer and the second fluorinated polymer.
The content of the first fluorinated polymer is preferably 0.1 to 5 mass%, more preferably 0.2 to 4 mass%, further preferably 0.3 to 3 mass% to the total mass of the present solid composition.
The content of the second fluorinated polymer is preferably 95 to 99.9 mass%, more preferably 96 to 99.8 mass%, further preferably 97 to 99.7 mass% to the total mass of the present solid composition.
The total content of the first fluorinated polymer and the second fluorinated polymer is preferably 99.0 to 100 mass%, more preferably 99.5 to 100 mass%, further preferably 99.8 to 100 mass% to the total mass of the present solid composition.

<Temperature T>

The solid composition obtained by coagulating the aqueous dispersion of the present invention, or the solid composition of the present invention, has a temperature T of preferably 19°C or lower, indicating the maximum heat absorption amount within a range of 10 to 35°C, as measured by the following method. The temperature T is preferably 18°C or lower, more preferably 17.5°C or lower.
The lower limit of the temperature T is 10°C. By the aqueous dispersion containing the first fluorinated polymer and the second fluorinated polymer (preferably particles containing the first fluorinated polymer and the second fluorinated polymer), the temperature T can be adjusted to be within the above range.

EXAMPLES

Now, the present invention will be described in further detail with reference to Examples. Ex. 1, 2, 5 and 6 are Examples of the present invention, and Ex. 3, 4 and 7 are Comparative Examples. However, it should be understood that the present invention is by no means restricted thereto. Amounts of the respective components in the after-described Tables are based on mass.

[Measurement and evaluation methods]

The measurement methods and evaluation methods are as follows.

<Glass transition temperature (Tg)>

Tg was measured using NEXTA DSC600 manufactured by Hitachi High-Tech Corporation. Specifically, 5 mg of a measurement sample was weighed on an aluminum sample pan, and in a nitrogen atmosphere, the sample was heated to 100°C at a heating rate of 10°C/min. Then, the sample was cooled to -60°C at a rate of 10°C/min. After the sample reached the predetermined temperature, it was heated again to 100°C at a rate of 10°C/min. Tg was estimated from the inflection point confirmed in the second heating step.

<Average particle size of particles in liquid>

The material dispersion was deaerated at room temperature (25°C) for 5 minutes, pressurized to 0.2 MPaG with nitrogen, and then purged to atmospheric pressure, to obtain a measurement sample. The particle size of the obtained sample was measured by a laser diffraction/scattering particle size distribution measuring apparatus (manufactured by Otsuka Electronics Co., Ltd., ELSZ) setting the number of measurements to 100 times. D50 was calculated from the measured particle sizes within a range of 1 to 300 nm, which was taken as the average particle size of the particles in the material dispersion.

The average particle size of the particles in the aqueous dispersion corresponding to the material dispersion, measured in the same manner as the material dispersion, was the same as the average particle size of the particles in the material dispersion. The aqueous dispersion corresponding to the material dispersion means, in the case of the after-described Example 1, the aqueous dispersion B corresponding to the material dispersion B.

The average particle size (D50) of the particles in the aqueous dispersion in each Example obtained by using the aqueous dispersion corresponding to the material dispersion, was measured by a laser diffraction/scattering particle size distribution measuring apparatus (manufactured by Otsuka Electronics Co., Ltd., ELSZ). The range of the particle sizes to be measured was not limited as different from the method of measuring the average particle size of the particles in the material dispersion. The aqueous dispersion in each Example obtained by using the aqueous dispersion corresponding to the material dispersion means, in the case of the after-described Example 1, the aqueous dispersion 1 obtained by using the aqueous dispersion B.

<Average particle size of particles after drying>

The particles obtained in each Example were dried and coagulated, and photographed by a scanning electron microscope (for example, JSM-IT700HR InTouchScope manufactured by JEOL Ltd.). From the obtained SEM images, particle sizes of five different particles were obtained and their arithmetic mean was obtained.

<Ratio of each units in polymer>

The ratio of each units in the polymer was obtained by $^{19}$F-NMR analysis and infrared absorption spectrum analysis.

<Content of compound represented by formula (S1)>

The content of the compound represented by the above formula (S1) to the total mass of the particles in the aqueous dispersion obtained in each of the after-described Examples was calculated by the method using an aqueous dispersion among the measurement methods using a liquid chromatography mass spectrometer disclosed in WO2018/181904, paragraphs [0710] to [0720]. The apparatus used was Agilent 1260 series HPLC/6460S, and the column used was cadenza CD-C18 manufactured by Imtakt Corporation.

<Content of compound represented by the formula (S2)>

The content of the compound represented by the formula (S2) to the total mass of the particles in the aqueous dispersion obtained in each of the after-described Examples was calculated by the method using an aqueous dispersion among the measurement methods using a liquid chromatography mass spectrometer disclosed in WO2018/181904, paragraphs [0721] to [0732]. The apparatus used was Agilent 1260 series HPLC/6460S, and the column used was cadenza CD-C18 manufactured by Imtakt Corporation.

<Concentration of fluorinated emulsifier in material dispersion>

The concentration of the fluorinated emulsifier to the total mass of the fluorinated polymer in the material dispersion was calculated from the amounts charged.

<Crystallization energy>

The melting point and the crystallization energy were measured by using DSC8500 manufactured by PerkinElmer.

Specifically, 5 mg of a measurement sample was weighed on an aluminum sample pan, heated in an Air atmosphere to 200°C at a heating rate of 10°C/min and held for 1 minute. Then, the sample was heated to 380°C at a heating rate of 10°C/min, held at 380°C for 1 minute and cooled to 200°C at 10°C/min.

Taking the peak top temperature derived from fusion of the sample confirmed at the heating step from 200°C to 380°C as the melting point, the crystallization energy was calculated from the peak area confirmed by the cooling step from 380°C to 200°C. A smaller absolute value of the crystallization energy corresponds to a higher molecular weight.

<Temperature T>

The temperature T was measured by using DSC8500 manufactured by PerkinElmer as a differential scanning calorimeter.

Specifically, 10 mg of a measurement sample was weighed on an aluminum sample pan and heated in an air atmosphere from -20°C to 370°C at a heating rate of 10°C/min. The temperature at which the maximum heat absorption amount was observed within a range of 10 to 35°C was taken as the temperature T.

[Production of material dispersion A]

Into a 1.3 L stainless steel pressure resistant reactor, ultrapure water (717 g), PMVE (50 g) and TFE (8 g) were charged and heated to 90°C with stirring at 500 rpm. An aqueous ammonium persulfate solution (3.6 mass%, 5 cc) was added to initiate polymerization. Since the pressure in the reactor decreased along with the start of the polymerization, TFE was added to keep a constant pressure. Upon injection of 2 g of TFE, the reactor was cooled to terminate the polymerization reaction. The gas remaining in the reactor was recovered, and the liquid was withdrawn. This liquid was taken as material dispersion A.

The material dispersion A was freeze-coagulated and subjected to filtration, and the obtained fluorinated polymer 1A was analyzed by NMR and as a result, TFE units/PMVE units=52/48 (molar ratio), and Tg was -5.9°C.

[Production of material dispersion B]

To the material dispersion A (490 g), Dowex Monosphere 650C (manufactured by DuPont, cation exchange resin, 20 g) was added. 60 minutes after the start of stirring, the mixture was subjected to filtration to separate the material dispersion and the ion exchange resin. To the material dispersion collected by filtration, Purolite A300 (manufactured by Purolite, anion exchange resin, 20 g) was added. 60 minutes after the start of stirring, the mixture was subjected to filtration to separate the material dispersion and the ion exchange resin thereby to obtain material dispersion B.

The material dispersion B had particles of the fluorinated polymer 1A (average particle size: 87 nm) dispersed in the aqueous medium, and the content of the fluorinated polymer 1A was 0.6 mass% to the total mass of the material dispersion B.

[Production of material dispersion C]

Into a 1.3 L stainless steel pressure resistant reactor, ultrapure water (717 g), PMVE (55 g), TFE (9 g) and aqueous ammonia (30 mass%, one drop) were charged and heated to 90°C with stirring at 500 rpm. Then, an aqueous ammonium persulfate solution (3.6 mass%, 5 cc) was added to initiate polymerization. Since the pressure in the reactor decreased along with the start of the polymerization, TFE was added to keep a constant pressure. Upon injection of 2 g of TFE, the reactor was cooled to terminate the polymerization reaction. The gas remaining in the reactor was recovered, and the liquid was withdrawn. This liquid was taken as material dispersion C.

The material dispersion C was freeze-coagulated and subjected to filtration, and the obtained fluorinated polymer 1C was analyzed by NMR and as a result, TFE units/PMVE units=52.4/47.6 (molar ratio), and Tg was -5.3°C.

[Production of material dispersion D]

To the material dispersion C (490 g), Dowex Monosphere 650C (manufactured by DuPont, cation exchange resin, 20 g) was added. 60 minutes after the start of stirring, the mixture was subjected to filtration to separate the material dispersion and the ion exchange resin. To the material dispersion collected by filtration, Purolite A300 (manufactured by Purolite, anion exchange resin, 20 g) was added. 60 minutes after the start of stirring, the mixture was subjected to filtration to separate the material dispersion and the ion exchange resin thereby to obtain material dispersion D.

The material dispersion D had particles of the fluorinated polymer 1C (average particle size: 23 nm) dispersed in the aqueous medium, and the content of the fluorinated polymer 1C was 0.7 mass% to the total mass of the material dispersion D.

[Production of material dispersion E]

Into a 1.3 L stainless steel pressure resistant reactor, ultrapure water (717 g) and TFE (43 g) were charged and heated to 90°C with stirring at 500 rpm. Then, an aqueous ammonium persulfate solution (3.6 mass%, 5 cc) was added to initiate polymerization. Since the pressure in the reactor decreased along with the start of the polymerization, TFE was added to keep a constant pressure. Upon injection of 2 g of TFE, the reactor was cooled to terminate the polymerization reaction. The gas remaining in the reactor was recovered, and the liquid was withdrawn. This liquid was taken as material dispersion E.

The material dispersion E was freeze-coagulated and subjected to filtration to obtain fluorinated polymer 1E. Tg of the fluorinated polymer 1E was 110°C.

[Production of material dispersion F]

To the material dispersion E (490 g), Dowex Monosphere 650C (manufactured by DuPont, cation exchange resin, 20 g) was added. 60 minutes after the start of stirring, the mixture was subjected to filtration to separate the material dispersion and the ion exchange resin. To the material dispersion collected by filtration, Purolite A300 (manufactured by Purolite, anion exchange resin, 20 g) was added. 60 minutes after the start of stirring, the mixture was subjected to filtration to separate the material dispersion and the ion exchange resin thereby to obtain material dispersion F. The material dispersion F had particles of the fluorinated polymer 1E (average particle size: 80 nm) dispersed in the aqueous medium, and the content of the fluorinated polymer 1E was 0.48 mass% to the total mass of the material dispersion F.

[Production of material dispersion G]

Into a 1.2 L stainless steel pressure resistant reactor, ultrapure water (740 g), sodium sulfite (88 mg), n-BMA (n-butyl methacrylate, 330 mg), iron(II) sulfate heptahydrate (11 mg) and CHELEST HC (17 mg) were charged and heated to 60°C with stirring at 500 rpm. Then, an aqueous potassium persulfate solution (5.0 mass%, 3.8 cc) was added and polymerization was conducted for 60 minutes. After completion of the polymerization, the liquid was withdrawn. The liquid was taken as material dispersion G.

The material dispersion G was heated to remove water, and the residue was dried by heating to obtain hydrocarbon polymer 1G (poly(n-BMA)). Tg of the hydrocarbon polymer 1G was 20°C.

[Production of material dispersion H]

To the material dispersion G (490 g), Dowex Monosphere 650C (manufactured by DuPont, cation exchange resin, 20 g) was added. 60 minutes after the start of stirring, the mixture was subjected to filtration to separate the material dispersion and the ion exchange resin. To the material dispersion collected by filtration, Purolite A300 (manufactured by Purolite, anion exchange resin, 20 g) was added. 60 minutes after the start of stirring, the mixture was subjected to filtration to separate the material dispersion and the ion exchange resin thereby to obtain material dispersion H.

The material dispersion H had particles of hydrocarbon polymer 1G (average particle size: 89 nm) dispersed in the aqueous medium, and from the amount of n-BMA charged, the content of the hydrocarbon polymer 1G was 0.044 mass% to the total mass of the material dispersion H.

[Production of material dispersion I]

Into a 1.3 L stainless steel pressure resistant reactor, ultrapure water (717 g), PMVE (55 g), TFE (9 g) and aqueous ammonia (30 mass%, one drop) were charged and heated to 90°C with stirring at 500 rpm. Then, an aqueous ammonium persulfate solution (3.6 mass%, 5 cc) was added to initiate polymerization. Since the pressure in the reactor decreased along with the start of the polymerization, TFE was added to keep a constant pressure. Upon injection of 1 g of TFE, the reactor was cooled to 20°C to terminate the polymerization reaction. The gas remaining in the reactor was recovered, nitrogen was injected until the pressure reached 0.2 MPaG, and the reactor was heated to 90°C. The reactor was heated for 3 hours and then cooled, and the liquid was withdrawn. This liquid was taken as material dispersion I.

The material dispersion I was freeze-coagulated and subjected to filtration, and the obtained fluorinated polymer 1I was analyzed by NMR and as a result, TFE units/PMVE units=52/48 (molar ratio), and Tg was -5.5°C.

[Production of material dispersion J]

To the material dispersion I (490 g), Dowex Monosphere 650C (manufactured by DuPont, cation exchange resin, 20 g) was added. 60 minutes after the start of stirring, the mixture was subjected to filtration to separate the material dispersion and the ion exchange resin. To the material dispersion collected by filtration, Purolite A300 (manufactured by Purolite, anion exchange resin, 20 g) was added. 60 minutes after the start of stirring, the mixture was subjected to filtration to separate the material dispersion and the ion exchange resin thereby to obtain material dispersion J. The material dispersion J had particles of the fluorinated polymer 1I (average particle size: 28 nm) dispersed in the aqueous medium, and the content of the fluorinated polymer 1I was 0.36 mass% to the total mass of the material dispersion J.

[Production of material dispersion K]

Into a 60.5 L stainless steel pressure resistant reactor equipped with a baffle plate and a stirrer, ultrapure water (45.4 kg) and PMVE (1.1 kg) were charged and heated to 90°C with stirring at 170 rpm. Then, TFE (72 g) and an aqueous ammonium persulfate solution (7.7 mass%, 150 g) were added to initiate polymerization. Since the pressure in the reactor decreased along with the start of the polymerization, TFE was added to keep a constant pressure. Upon injection of 165 g of TFE, the reactor was cooled to terminate the polymerization reaction. The obtained liquid was taken as material dispersion K. The material dispersion K contains fluorinated polymer 1K.
The material dispersion K was freeze-coagulated and subjected to filtration, and the obtained fluorinated polymer 1K was analyzed by NMR and as a result, TFE units/PMVE units=43/57 (molar ratio), and Tg was -5°C.

[Production of material dispersion L]

Two ion exchange resin packed towers respectively packed with Dowex Monosphere 650C (manufactured by DuPont, cation exchange resin, 843 mL) and Purolite A300 (manufactured by Purolite, anion exchange resin, 843 mL) were prepared, and the material dispersion K was passed through the towers to obtain material dispersion L.
The material dispersion L had particles of the fluorinated polymer 1K (average particle size: 50 nm) dispersed in the aqueous medium, and the content of the fluorinated polymer 1K was 0.77 mass% to the total mass of the material dispersion L.

[Example 1]

Into a 1.0 L stainless steel pressure resistant reactor, ultrapure water (121 g), the material dispersion B (475 g) and WAX (28 g) were charged to obtain aqueous dispersion B. The aqueous dispersion B was heated to 70°C with stirring at 260 rpm. TFE was injected until the pressure in the reactor reached 1.4 MPaG, and an aqueous APS (ammonium persulfate) solution (0.2 mass%, 5 ml) was added to initiate polymerization. Since the pressure in the reactor decreased along with the start of the polymerization, TFE was added to keep a constant pressure. Upon injection of 110 g of TFE, the reactor was cooled to terminate the polymerization reaction. The polymerization time was 220 minutes.
The content of the fluorinated polymer 1A was 0.48 mass% to the total mass of the aqueous dispersion B.
The content (solid content concentration) of the fluorinated polymer 1A in the aqueous dispersion B was calculated in accordance with the following formula, from the mass of the residue weighed after heating 2.0 g of the aqueous dispersion B at 170°C for 20 minutes. The solid content concentration was calculated. In the following Examples, the solid content concentration was calculated in the same manner except that the aqueous dispersion was one used in each Example.
Solid content concentration (mass%)=100 $\times$ reside of aqueous dispersion B heated (g)/mass (2 g) of aqueous dispersion B
The concentration of the fluorinated emulsifier was 0 mass ppm to the total mass of the fluorinated polymer 1A in the aqueous dispersion B.
Further, based on the amount of the aqueous medium used in the aqueous dispersion B used for the polymerization being 100 parts by mass, the amount of the monomer (TFE) used for the polymerization was 18.5 parts by mass.
The gas remaining in the reactor was recovered, and the liquid was withdrawn. This liquid was taken as aqueous dispersion 1. The aqueous dispersion 1 was a dispersion having particles containing the fluorinated polymer 1A and fluorinated polymer 2A (average particle size: 228 nm) dispersed in the aqueous medium, and had a solid content concentration of 16.0 mass%.

The particles in the obtained aqueous dispersion 1 were coagulated and collected by filtration to obtain PTFE. The PTFE dried at 150°C had a melting point of 338°C and a crystallization energy of -35 J/g. The temperature T was 15°C. After drying, the composition was calculated by NMR and as a result, TFE units/PMVE units=99.1/0.9 (molar ratio).

In the aqueous dispersion 1, the contents of the compound represented by the formula (S1) and the compound represented by the formula (S2) were respectively 100 mass ppb or less to the total mass of the particles in the aqueous dispersion 1.

[Example 2]

Into a 1.0 L stainless steel pressure resistant reactor, ultrapure water (121 g), the material dispersion D (475 g) and WAX (28 g) were charged to obtain aqueous dispersion D. The aqueous dispersion D was heated to 70°C with stirring at 260 rpm. TFE was injected until the pressure in the reactor reached 1.4 MPaG, and an aqueous APS solution (0.2 mass%, 5 ml) was added to initiate polymerization. Since the pressure in the reactor decreased along with the start of the polymerization, TFE was added to keep a constant pressure. Upon injection of 170 g of TFE, the reactor was cooled to terminate the polymerization reaction. The polymerization time was 282 minutes.

The content of the fluorinated polymer 1C was 0.56 mass% to the total mass of the aqueous dispersion D.

The concentration of the fluorinated emulsifier was 0 mass ppm to the total mass of the fluorinated polymer 1C in the aqueous dispersion D.

The amount of the monomer (TFE) used for the polymerization was 28.5 parts by mass based on the amount of the aqueous medium used in the aqueous dispersion D used for the polymerization being 100 parts by mass.

The gas remaining in the reactor was recovered, and the liquid was withdrawn. This liquid was taken as aqueous dispersion 2. The aqueous dispersion 2 was a dispersion having particles of the fluorinated polymer 1C and fluorinated polymer 2C (average particle size: 258 nm) dispersed in the aqueous medium, and had a solid content concentration of 22.3 mass%.

The particles in the obtained aqueous dispersion 2 were coagulated and collected by filtration to obtain PTFE. The PTFE dried at 150°C had a melting point of 338°C and a crystallization energy of -33 J/g. The temperature T was 17°C. After drying, the composition was calculated by NMR and as a result, TFE units/PMVE units=99.3/0.7 (molar ratio).

In the aqueous dispersion 2, the contents of the compound represented by the formula (S1) and the compound represented by the formula (S2) were respectively 100 mass ppb or less to the total mass of the particles in the aqueous dispersion 2.

[Example 3]

Into a 1.0 L stainless steel pressure resistant reactor, ultrapure water (121 g), the material dispersion F (475 g) and WAX (28 g) were charged to obtain aqueous dispersion F. The aqueous dispersion F was heated to 70°C with stirring at 260 rpm. TFE was injected until the pressure in the reactor reached 1.4 MPaG, and an aqueous APS solution (0.2 mass%, 5 ml) was added to initiate polymerization. Since the pressure in the reactor decreased along with the start of the polymerization, TFE was added to keep a constant pressure. Upon injection of 70 g of TFE, the reactor was cooled to terminate the polymerization reaction. The polymerization time was 185 minutes.

The gas remaining in the reactor was recovered, and the liquid was withdrawn, however, the entire liquid was coagulated, and an aqueous dispersion having particles of the fluorinated polymer dispersed in the aqueous medium could not be obtained.

[Example 4]

Into a 1.0 L stainless steel pressure resistant reactor, the material dispersion H (596 g) and WAX (28 g) were charged and heated to 70°C with stirring at 260 rpm. TFE was injected until the pressure in the reactor reached 1.4 MPaG, and an aqueous APS solution (0.2 mass%, 5 ml) was added to initiate polymerization. Since the pressure in the reactor decreased along with the start of the polymerization, TFE was added to keep a constant pressure. Upon injection of 70 g of TFE, the reactor was cooled to terminate the polymerization reaction. The polymerization time was 470 minutes.

The gas remaining in the reactor was recovered, and the liquid was withdrawn. This liquid was taken as aqueous dispersion 4. The aqueous dispersion 4 was a dispersion having particles containing the hydrocarbon polymer 1G and fluorinated polymer 2G (average particle size: 278 nm) dispersed in the aqueous medium, and had a solid content concentration of 10.2 mass%.

The aqueous dispersion 4 had a low solid content concentration, and thus it can be considered that the fluorinated polymer could not be produced efficiently.

The particles in the obtained aqueous dispersion 4 were coagulated and collected by filtration to obtain PTFE. The PTFE dried at 150°C had a melting point of 338°C and a crystallization energy of -27 J/g. The temperature T was 20°C.

In the aqueous dispersion 4, the contents of the compound represented by the formula (S1) and the compound represented by the formula (S2) were respectively 100 mass ppb or less to the total mass of the particles in the aqueous dispersion 4.

[Example 5]

Into a 1.0 L stainless steel pressure resistant reactor, ultrapure water (121 g), the material dispersion J (475 g) and WAX (28 g) were charged to obtain aqueous dispersion J. The aqueous dispersion J was heated to 70°C with stirring at 260 rpm. TFE was injected until the pressure in the reactor reached 1.4 MPaG, and an aqueous DSAP (disuccinic peroxide) solution (0.45 mass%, 3 ml) was added to initiate polymerization. Since the pressure in the reactor decreased along with the start of the polymerization, TFE was added to keep a constant pressure. Upon injection of 170 g of TFE, the reactor was cooled to terminate the polymerization reaction. The polymerization time was 426 minutes.

The content of the fluorinated polymer 1I was 0.29 mass% to the total mass of the aqueous dispersion J.

The concentration of the fluorinated emulsifier is 0 mass ppm to the total mass of the fluorinated polymer 1I in the aqueous dispersion J.

The amount of the monomer (TFE) used for the polymerization was 28.5 parts by mass based on the amount of the aqueous medium used in the aqueous dispersion J used for the polymerization being 100 parts by mass.

The gas remaining in the reactor was recovered, and the liquid was withdrawn. This liquid was taken as aqueous dispersion 5. The aqueous dispersion 5 was a dispersion having particles containing the fluorinated polymer 1I and fluorinated polymer 2I (average particle size: 262 nm) dispersed in the aqueous medium and had a solid content concentration of 21.3 mass%.

The particles in the obtained aqueous dispersion 5 were coagulated and collected by filtration to obtain PTFE. The PTFE dried at 150°C had a melting point of 345°C and a crystallization energy of -17.5 J/g. The temperature T was 17°C. After drying, the composition was calculated by NMR and as a result, TFE units/PMVE units=99.6/0.4 (molar ratio).

In the aqueous dispersion 5, the contents of the compound represented by the formula (S1) and the compound represented by the formula (S2) were respectively 100 mass ppb or less to the total mass of the particles in the aqueous dispersion 5.

[Example 6]

Into a 100 L stainless steel pressure resistant reactor, ultrapure water (9.64 kg), the material dispersion L (42.0 kg) and WAX (1324 g) were charged to obtain aqueous dispersion L. The aqueous dispersion L was heated to 70°C and stirring was started. TFE was injected until the pressure in the reactor reached 1.76 MPaG, and an aqueous DSAP solution (0.2 mass%, 1 L) was added to initiate polymerization. Since the pressure in the reactor decreased along with the start of the polymerization, TFE was added to keep a constant pressure. Upon injection of 14.0 kg of TFE, the reactor was cooled to terminate the polymerization reaction. The polymerization time was 154 minutes.

The content of the fluorinated polymer 1K was 0.62 mass% to the total mass of the aqueous dispersion L.

The concentration of the fluorinated emulsifier was 0 mass ppm to the total mass of the fluorinated polymer 1K in the aqueous dispersion L.

The amount of the monomer (TFE) used for the polymerization was 27.1 parts by mass based on the amount of the aqueous medium used in the aqueous dispersion L used for the polymerization being 100 parts by mass.

The gas remaining in the reactor was recovered, and the liquid was withdrawn. This liquid was taken as aqueous dispersion 6. The aqueous dispersion 6 was a dispersion having particles of the fluorinated polymer 1K and fluorinated polymer 2K (average particle size: 200 nm) dispersed in the aqueous medium and had a solid content concentration of 21 mass%.

The particles in the obtained aqueous dispersion 6 were coagulated and collected by filtration to obtain PTFE. The PTFE dried at 150°C had a melting point of 344°C and a crystallization energy of -16 J/g. The temperature T was 17°C. After drying, the composition was calculated by NMR and as a result, TFE units/PMVE units=99.1/0.9 (molar ratio).

In the aqueous dispersion 7, the contents of the compound represented by the formula (S1) and the compound represented by the formula (S2) were respectively 100 mass ppb or less to the total mass of the particles in the aqueous dispersion 2.

[Example 7]

The material dispersion B was freeze-coagulated and subjected to filtration, and the obtained fluorinated polymer 1B (0.2 g) and a PTFE powder (manufactured by AGC Inc., Fluon (registered trademark) PTFE CD145E, 9.8 g) were mixed to obtain solid composition 7. The temperature T was 22.1°C.

[Evaluation]

<Coloring>

12 g of the dried particles in each Example were weighed and pressed under a pressure of 0.78 MPaG for 2 minutes into circular cylinders having a diameter of 26 mm and a height of 8 mm. The obtained formed product (pellets) was heated in the air at 380°C for 30 minutes and cooled to room temperature (25°C). The number of black spots on the surface of the pellets was visually counted to evaluate coloring based on the following standards.
The results are shown in Table 1. In Table 1, "-" means no evaluation of coloring was conducted.

A: number of black spots: 0 to 4
B: number of black spot: 5 or more

Table 1

| | Example 1 | Example 2 | Example 3 | Example 4 | Example 5 | Example 6 |
|---|---|---|---|---|---|---|
| Coloring | A | A | - | B | A | A |

It was shown that according to the method for producing the fluorinated polymer of the present invention, the fluorinated polymer could be produced efficiently without using an emulsifier while using an aqueous medium with less environmental burden (Examples 1, 2, 5 and 6).
Further, it was shown from the comparison between Examples 1, 2 and 5 that a high molecular weight PTFE could be obtained by conducting a heating step of heating the aqueous medium having the first fluorinated polymer dispersed, after the first fluorinated polymer was obtained (Example 5).
On the other hand, in Examples 3 and 4, the fluorinated polymer could not be produced efficiently.
The entire disclosure of Japanese Patent Application No. 2023-063511 filed on April 10, 2023, including specification, claims and summary is incorporated herein by reference in its entirety.

**Claims**

1. A method for producing a fluorinated polymer, which comprises polymerizing a monomer containing tetrafluoroethylene in an aqueous dispersion containing a first fluorinated polymer having a glass transition temperature of 10°C or lower and an aqueous medium, to produce a second fluorinated polymer that is different from the first fluorinated polymer, wherein

before start of the polymerization of the monomer, the content of the first fluorinated polymer is 0.01 to 4.0 mass% to the total mass of the aqueous dispersion, and wherein
before start of the polymerization of the monomer, the concentration of a fluorinated emulsifier is 100 mass ppm or less to the total mass of the first fluorinated polymer in the aqueous dispersion.

2. The method for producing the fluorinated polymer according to Claim 1, wherein the first fluorinated polymer contains units based on tetrafluoroethylene and units based on a perfluoro(alkyl vinyl ether).

3. The method for producing the fluorinated polymer according to Claim 2, wherein in the first fluorinated polymer, the proportion of the amount of the units based on a perfluoro(alkyl vinyl ether) is 20 to 60 mol% to the total amount of the units based on tetrafluoroethylene and the units based on a perfluoro(alkyl vinyl ether).

4. The method for producing the fluorinated polymer according to Claim 1 or 2, wherein the amount of the monomer used is 1 to 50 parts by mass per 100 parts by mass of the amount of the aqueous medium used.

5. The method for producing the fluorinated polymer according to Claim 1 or 2, wherein the monomer is polymerized in the presence of a polymerization initiator.

6. An aqueous dispersion comprising an aqueous medium, a first fluorinated polymer having a glass transition temperature of 10°C or lower and a second fluorinated polymer that contains units based on tetrafluoroethylene and is different from the first fluorinated polymer, wherein a temperature T at which the maximum heat absorption amount is observed within a range of 10 to 35°C with respect to a solid composition obtained by coagulating the aqueous dispersion, measured by the following method, is 19°C or lower:

temperature T measurement method:

measured with respect to a solid composition having no heat history to 300°C or higher, at a heating rate of 10°C/min by a differential scanning calorimeter.

7. A solid composition comprising a first fluorinated polymer having a glass transition temperature of 10°C or lower, and a second fluorinated polymer that contains units based on tetrafluoroethylene and is different from the first fluorinated polymer, wherein a temperature T at which the maximum heat absorption amount is observed within a range of 10 to 35°C, measured by the following method, is 19°C or lower:

temperature T measurement method:

measured with respect to a solid composition having no heat history to 300°C or higher, at a heating rate of 10°C/min by a differential scanning calorimeter.

8. A solid composition obtained by coagulating the aqueous dispersion as defined in Claim 6, wherein a temperature T at which the maximum heat absorption amount is observed within a range of 10 to 35°C, is 19°C or lower:

temperature T measurement method:

measured with respect to a solid composition having no heat history to 300°C or higher, at a heating rate of 10°C/min by a differential scanning calorimeter.

9. The aqueous dispersion according to Claim 6, wherein the content of units based on a perfluoro(alkyl vinyl ether) is 0.1 to 5.0 mol% to the total amount of all units of the first fluorinated polymer and the second fluorinated polymer, and the content of a compound represented by the formula (S1) and the content of a compound represented by the formula (S2) are respectively 100 mass ppb or less to the total mass of the first fluorinated polymer and the second fluorinated polymer:

formula (S1):         $H\text{-}(CF_2)_{n-1}\text{-}COOM$

formula (S2):         $H\text{-}(CF_2)_n\text{-}SO_3M$

in the formula (S1) and the formula (S2), M is each independently a hydrogen atom, Na, K or $NH_4$, and n is each independently 8 or 10.

10. The solid composition according to Claim 7, comprising the first fluorinated polymer having a glass transition temperature of 10°C or lower and the second fluorinated polymer that contains units based on tetrafluoroethylene and is different from the first fluorinated polymer, wherein

the content of units based on a perfluoro(alkyl vinyl ether) is 0.1 to 5.0 mol% to the total amount of all units of the first fluorinated polymer and the second fluorinated polymer, and the content of a compound represented by the formula (S1) and the content of a compound represented by the formula (S2) are respectively 100 mass ppb or less to the total mass of the first fluorinated polymer and the second fluorinated polymer:

formula (S1):         $H\text{-}(CF_2)_{n-1}\text{-}COOM$

formula (S2):         $H\text{-}(CF_2)_n\text{-}SO_3M$

in the formula (S1) and the formula (S2), M is each independently a hydrogen atom, Na, K or $NH_4$, and n is each independently 8 or 10.

## INTERNATIONAL SEARCH REPORT

| International application No. |
|---|
| **PCT/JP2024/014064** |

| **A. CLASSIFICATION OF SUBJECT MATTER** |
|---|
| *C08F 2/24*(2006.01)i; *C08F 214/26*(2006.01)i; *C08F 216/14*(2006.01)i; *C08F 259/08*(2006.01)i; *C08L 27/18*(2006.01)i <br> FI:   C08F2/24; C08F259/08; C08F214/26; C08F216/14; C08L27/18 |
| According to International Patent Classification (IPC) or to both national classification and IPC |

| **B. FIELDS SEARCHED** |
|---|
| Minimum documentation searched (classification system followed by classification symbols) |
| C08F2/00-2/60; 6/00-283/00; 283/02-289/00; 291/00-297/08; 301/00; C08L1/00-101/14; C08K3/00-13/08 |
| Documentation searched other than minimum documentation to the extent that such documents are included in the fields searched |
| Published examined utility model applications of Japan 1922-1996 <br> Published unexamined utility model applications of Japan 1971-2024 <br> Registered utility model specifications of Japan 1996-2024 <br> Published registered utility model applications of Japan 1994-2024 |
| Electronic data base consulted during the international search (name of data base and, where practicable, search terms used) |
| |

| **C. DOCUMENTS CONSIDERED TO BE RELEVANT** | | |
|---|---|---|
| Category* | Citation of document, with indication, where appropriate, of the relevant passages | Relevant to claim No. |
| X | JP 50-084650 A (E.I. DU PONT DE NEMOURS AND CO.) 08 July 1975 (1975-07-08) <br>     claim 2, page 3, lower left column, line 12 to lower right column, line 6, page 4, upper left <br>     column, lines 7-9, page 6, upper left column, line 14 to upper right column, line 5, page 9, <br>     lower left column, line 10 to page 10, upper left column, line 9, table 4, example 3 | 6-10 |
| A | | 1-5 |
| A | WO 2014/084400 A1 (DAIKIN INDUSTRIES, LTD.) 05 June 2014 (2014-06-05) <br>     entire text | 1-10 |
| A | CN 107778412 A (ZHONGHAO CHENGUANG RESEARCH INSTITUTE OF CHEMICAL <br> INDUSTRY) 09 March 2018 (2018-03-09) <br>     entire text | 1-10 |
| A | JP 2012-513530 A (E.I. DU PONT DE NEMOURS AND CO.) 14 June 2012 (2012-06-14) <br>     entire text | 1-10 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/014064**

| Patent document cited in search report | | | Publication date (day/month/year) | Patent family member(s) | | | Publication date (day/month/year) |
|---|---|---|---|---|---|---|---|
| JP | 50-084650 | A | 08 July 1975 | US | 3929934 | A | |
| | | | | claim 1, page 1, column 2, lines 32-39, page 1, column 2, lines 58-61, page 2, column 4, lines 59-66, page 4, column 7, line 54 to column 8, line 9, table IV, example 3 | | | |
| | | | | GB | 1491043 | A | |
| | | | | DE | 2454851 | A1 | |
| | | | | FR | 2251581 | A1 | |
| | | | | BE | 822306 | A | |
| | | | | NL | 7415057 | A | |
| | | | | AU | 7546874 | A | |
| | | | | CA | 1037197 | A | |
| | | | | LU | 71299 | A1 | |
| | | | | IT | 1025797 | B | |
| WO | 2014/084400 | A1 | 05 June 2014 | US | 2015/0299342 | A1 | |
| | | | | entire text | | | |
| | | | | EP | 2927248 | A1 | |
| | | | | CN | 104812781 | A | |
| CN | 107778412 | A | 09 March 2018 | (Family: none) | | | |
| JP | 2012-513530 | A | 14 June 2012 | US | 2010/0160490 | A1 | |
| | | | | entire text | | | |
| | | | | WO | 2010/075359 | A1 | |
| | | | | EP | 2367858 | A1 | |
| | | | | EP | 3091039 | A1 | |
| | | | | CN | 102264777 | A | |

Form PCT/ISA/210 (patent family annex) (July 2022)

**EP 4 696 720 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007046377 A
- WO 2018181904 A

- JP 2023063511 A